# EUROPEAN PATENT APPLICATION

(11) **EP 1 630 703 A1**
(43) Date of publication of application: **01.03.2006**
(21) Application number: 05255225.4
(22) Date of filing: 25.08.2005
(51) Int. Cl.: G06F 17/30

(54) **An individually personalized customized report document system with user feedback**

(30) Priority: 30.08.2004 US 929980
(71) Applicant: Xerox Corporation, Rochester, New York 14644 (US)
(72) Inventor: Sembower, Neil R., Webster NY 14580 (US); Cote, Alan T., Walworth NY 14568 (US); Lai, Weiwen, Lake Oswego OR 97035 (US); Purvis, Lisa S., Fairport NY 14450 (US); Karlsson, Jonas, Rochester NY 14618 (US); Harrington, Steven J., Webster NY 14580 (US); Wayman, Elizabeth D., Ontario, NY 14519 (US)
(74) Representative: Skone James, Robert Edmund

(57) **Abstract**

A system and methodology is provided herein employing automated search, filtering, and automated document layout technologies conjoined with various delivery options to provide an end-to-end information push service. As such, it enables complete personalized custom report documents to be automatically created, thereby reducing cost in existing personalized document workflows, as well as enabling documents to be created that increase consumer satisfaction and knowledge worker productivity. The user satisfaction and productivity is enhanced by tracking the user's actual usage of the report document and feeding that usage back into the user profile. One example deployment manifestation of the teachings provided yields a personal newspaper embodiment which monitors the user usage and provides feedback of that usage to the system methodology thus dynamically altering any subsequently delivered custom report documents.

## Description

The present invention relates generally to the automated generation of documents. The present invention further relates to information "push" systems which provide electronic documents to end users.

The number of personalized information service providers including personalized news providers is growing rapidly. However, the level of personalization presently provided is primitive and typically constrained to the selection of a set of predefined categories and topics by the personalized information service provider.

Current information "push" systems are typically not automated and are limited in scope. Generally a user is required to complete certain portions (or even all) of a given workflow, including such items as: gathering the content; filtering it for applicability; and laying it out. The user does not have a lot of freedom to specify his or her real interests. Furthermore, the provider is generally not using the user's actual experience and behavior in the information consumption process to improve the user experience. Finally, many of the information service providers focus only on web publishing, or email, and thus the print functionality is not easily accessible at a low cost. The resulting documents are thereby necessarily human constructed and so are time consuming and costly to produce, as well as lacking much in the way of personalization.

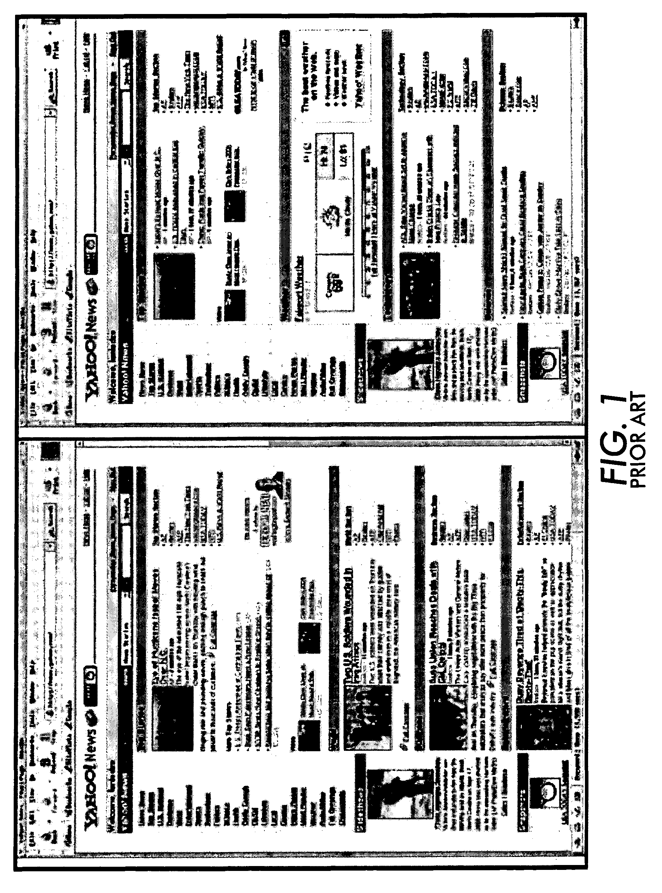

The current state of the art for information push may be found as characterized in several forms. One such form is typified by "portal" kinds of services such as found on the internet for example at myYahoo.com, where a user can choose certain categories of interest, and decide some things about how that information is laid out. Two examples are shown in Figure 1. The example page depicted on the left side of Figure 1 shows one default layout for the front page of myYahoo, with each information section appearing in default order, complete with a headline summary. The right hand side of Figure 1 shows a layout page with different news sections selected, and in a different order, some sections with 5 headlines and some sections with 3 headlines but no summary. Such portal-based information service forms have a limited and existing set of categories that the user must choose from, and a limited layout capability (i.e. document will always have the sections sequentially ordered, the news items sequentially one after another, picture on the top left, etc.).

Another information push service example is in the area of company newsletters that are collated and sent out to company employees on a regular basis. Most such newsletters are created without an automated process, and are not personalized. A further form example is in the area of web pages with changing content. Services exist where a user can sign up to be notified if a set of web pages they are interested in change in any way. The information about what has changed is then pushed to the subscriber. This information is typically simply a list of changes, but is not supplied as a formatted document synthesizing the information about all of the changes.

So yet again portal-based information service forms such as described above have a limited and existing set of categories that the user must choose from, and a tightly limited layout capability.

Thus, it would be desirable to provide a methodology for personalized information service providers to offer individually personalized customized report documents. These personal report documents being provided with results from a simple query that includes a wide variety of diverse results, including filtering those results against a particular user profile, and for which the diverse content pieces are laid out without human intervention into a user personalized deliverable report document format, the layout also as provided by the user profile. These user personalized report documents need to be less costly to produce, minimize the user time consumed in their setup, and improve the user experience by employing the user's actual responses and behavior in the information consumption process.

Disclosed in embodiments herein is a method for personalized report document generation comprising: profiling user interests into a user profile; querying various data repositories for content matching user interests; filtering the results, returned from the querying step, for scoring and profiling against the user profile for relevant content results; applying automated document layout techniques to the relevant content results to yield a personalized report document; and delivering the personalized report document. Further, tracking of the user's actual usage of the report document and feeding of that usage back into the user profile performed.

Also disclosed in embodiments herein is a method for custom report document generation involving profiling user interests into a user profile and querying various data repositories for content matching those user interests. This is followed by filtering the results, returned from the querying step, against the user profile for relevant content results. Then applying automated document layout techniques to the relevant content results to yield a custom document; and delivering the resultant custom document. The user's actual usage of the report document is tracked and fed back into the user profile.

Further disclosed in embodiments herein is a system for personalized report document generation comprising: a user interface profiler to capture user interests into a user profile; a query module for querying various data repositories for content matching user interests; a content filter for filtering the results returned from the querying step for scoring and profiling against the user profile for relevant content results; an automated document layout module for applying automated document layout techniques to the relevant content results to yield a personalized report document; and a delivery system for delivering the personalized report document to the user, tracking the user's actual usage of the report document and feeding that usage back into the user profile.

FIGURE 1 shows prior art portal web site page layout in two variants.

FIGURE 2 depicts a high level overview of a personalized news service.

FIGURE 3 depicts the personalized news service data flow schematic of Figure 2 in greater detail.

FIGURE 4 shows the software module interactions for an automated personalized report document system.

The teachings provided herein disclose a method to automatically search for filter, and lay out information content into a personalized report document. Heretofore, there has been no notion of taking a simple web query that returns a wide variety of diverse results, filtering those results against a particular user profile, and laying out the diverse content pieces into a deliverable report document without any human intervention which may further dynamically alter its layout depending upon the delivery medium chosen. As described herein, user can submit a profile containing a description of the kinds of information she is interested in, and the system will then "push" a document out to the user that contains the appropriate content, laid out into a pleasing document design. As will be understood to those skilled in the art, this invention can be applied to many types of information and report documents. However, for the purposes of disclosure, a personal newspaper or news service that may be provided in hardcopy or electronic form has been chosen as but one embodiment to illustrate the claimed teachings.

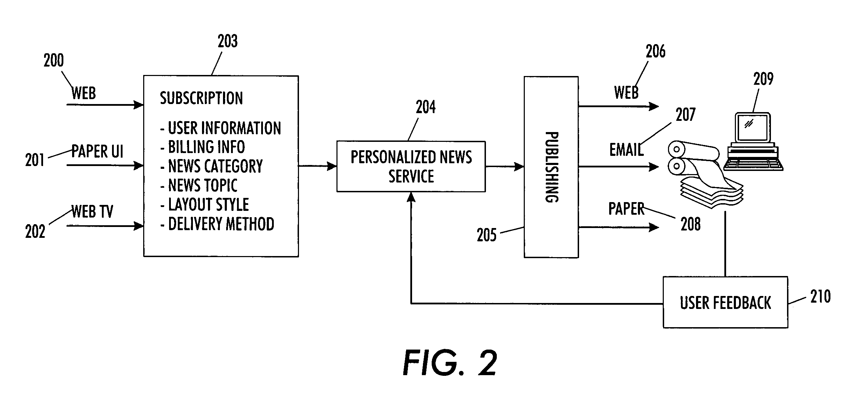

As depicted in Figure 2 this Personalized News Service embodiment is an application methodology (referred to as MyNewsPaper) that allows personalized news 209 to be published 205 & delivered to a reader via multiple channels: web 206, paper 208, and email 207. The reader provides his/her personalized news requests via multiple types of media: web 200, paper UI(User Interface) 201, or web TV 202 to the subscription front-end 203. This subscription front-end 203 gathers such information as for example: user identity; billing particulars; news categories of interest; preferred report layout style; desired delivery methods; etc. All of this information as interactively gathered is subsumed into a user profile 400. The reader's actual usage in reading the news items is tracked and is fed back 210 as user feed back to the personalized news service MyNewsPaper application 204.

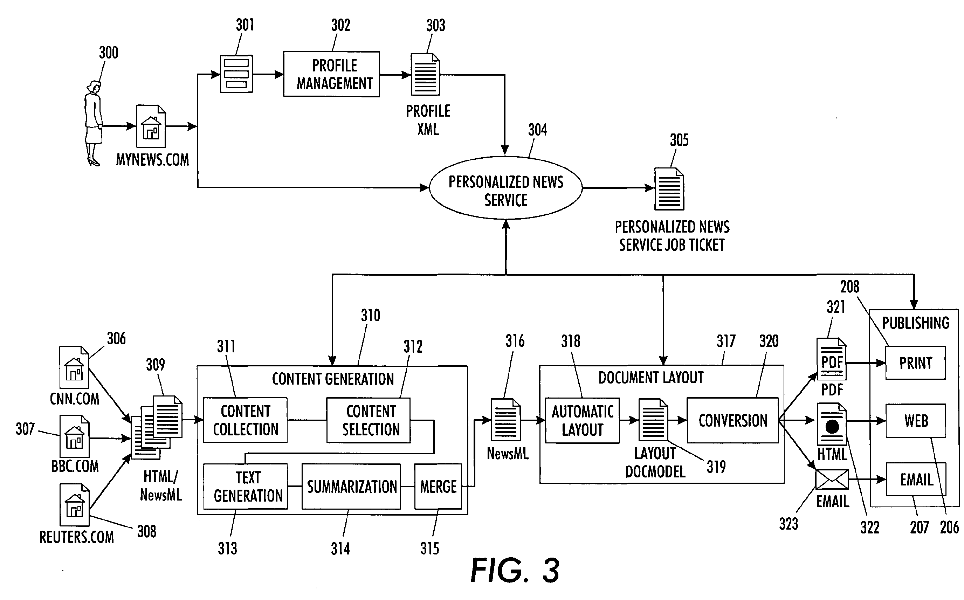

Figure 3 depicts the personalized news service data flow schematic of Figure 2 but provides greater detail of how the MyNewsPaper application will provide a user with a true personalized information service. This personalized news service 304 report document application is an integration of some of the technologies developed in the areas of knowledge profiling, content collection/filtering, automatic layout and digital printing automation. The content personalization 310 is achieved through two levels of filtering. The first level of filtering is keyword matching where keywords are used to search the content repositories for the initial results. The second level of filtering is to evaluate the top results of the first level findings against the user's knowledge profile, which is a content-based user knowledge profile. This knowledge is the result of the MyNewsPaper application's learning process towards the user and is built-up over time by condensing each piece of content the user consumed into a small set of representative information entities which may then be fed back into the user profile 303. The automatic layout uses user-supplied easily understood information such as high quality vs. low cost to create a layout style that best fits the chosen output media. Further the automatic layout enables hardcopy printout that looks right as well as electronic delivery. Indeed the ADL (Automatic Document Layout allows the report document or MyNewsPaper to be dynamically re-laid-out should the on-line viewing user determine that hardcopy would be more desirable. Finally the document is automatically printed, web published or emailed to the user as part of a JDF/PDF workflow automation process.

The user 300 in figure 3 uses a browser to interface via web site with input form 301 as a front-end to the profile manager 302. The user 300 first chooses a set of predefined news categories, or provides some descriptions in text particular with news topics such as "Israel and Palestine conflicts in the middle east". An initial user profile XML 303 containing some key information entities that represent user intentions would be created and provided as needed to the personalized new service 304 which in turn may generate personalized news service job ticket 305 by demand. The application's knowledge towards the reader's 300 interests accumulates and refines as the reader consumes more and more news articles and that usage is fed back to the profile 303. This may include a dynamic (even on-the-fly) shifting of accompanying advertisements in the report document which better reflect the users interests as well. The actual user feedback mechanism 210 varies depending on the output media. For example, a network capable hand held bar code or data glyph scanner can be used on paper hardcopy output with results fed back over the network, and similarly for browser delivered report documents, the mouse clicks as the user interacts with the content can be tracked over the browser. This user usage is fed back into the user profile 303.

By using key words derived from this user profile 303, a meta search engine 310 then searches the news repositories and gives an initial ranking to the results. When so invoked, query is made in one embodiment of various web based providers which may include for example: CNN.com 306, the BBC.com 307 and Reuters.com 308, or any other web based, local area network, wide area network or other connected data repository. In this example instance HTML/NewsML 309 is provided to the content generation module 310. At content collection 311 each of the chosen top results is then condensed into a set of information entities and compared against the pool of information entities stored in the user profile 303 through knowledge profiling technology 312. The most relevant results 316 are chosen and sent after text generation 313 summarization 314 and merging 315, to the automatic layout module 318 and a best layout style is applied via the advanced layout technology in view of layout document model 319. The layout document model 319 derives its parameters from the user profile 303 and the intended publishing delivery mechanism. The produced document is finally published 320 as a PDF 321, HTML 322, or email 323, and sent via digital printing 208, web publishing 206, or email 207 with the ADL adjusting the MyNewsPaper layout to fit each publishing type as appropriate. The entire workflow in this example embodiment is automated via industry stands such as PDF or JDF.

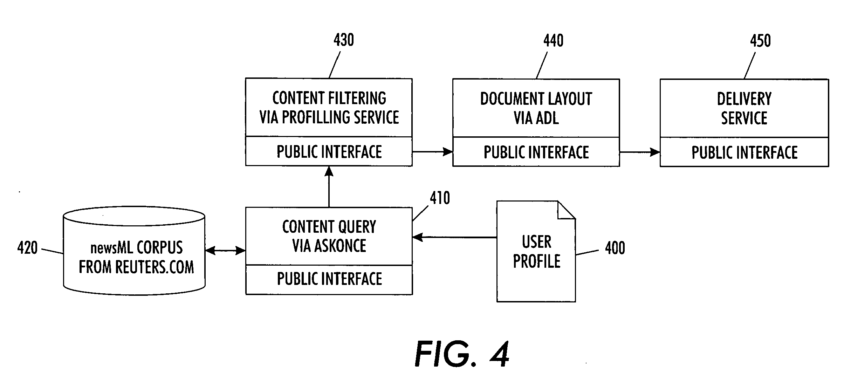

In Figure 4 shows the software module interactions for an automated personalized report document system. Note that each module has a public interface for passing data and operators. The user profile 400 containing user interests and preferences is passed to the content query module 410. The content query module 410 may be any number of software packages including search engines, web spiders, search bots and the like as employed across the World Wide Web, Local Area Networks or Wide Area Networks and any other connected data repository. However, in one embodiment the query module 410 is implemented by askOnce™ software as is taught in U.S. Patents Numbers 6,347,314, 6,327,590, 6,381,598, and 6,434,546.

The content query module 410 will seek to perform a keyword match against the content of various database repositories 420 (for example Reuters.com) for interesting content and collect results thereby. The responsibility, in this embodiment, of content query module 410, is to locate and identify candidate content to be included in the delivered document, not to select content for inclusion, a requisite result as content query 410 may return the same content across multiple query invocations of the report document system. These query results are then passed to the content filtering module 430 for profiling and scoring against the user profile 400. In one embodiment the content filtering module 430 is implemented by product software as is taught in U.S. Patent Number 5,754,939, U.S. Patent Publications: US20030069877, US20030061201, US20030033288, US20030033287, and EP-A-1143356A3.

An alternative approach for content filtering module 430 is implemented by a profile scheme. The profiles considered here concern documents, users, communities and information sources and more generally objects that can each be associated to textual information. The profiles are composed of Atomic Profile Elements (APE). An APE typically contains the most important concepts concerning a document or user interest, or community interest or information covered by an information source. One APE contains only terms of one language but any object associated with textual information in different languages can be profiled by several APE's (one for each language). Please note that the concepts in the APE can be stored as terms with a corresponding weight as in classical vector space model. The concepts can also be represented in a manner of finer granularity as terms, noun phrases, entities, etc. Instead of storing terms independently in vectors, text phrases can also be represented in contextual graphs thus keeping knowledge about relations between words or about possible translations of words. A monolingual document may then be represented by one single APE. A multilingual document may be represented by several APE's one per language used in the document. For more complex entities (user, community, information source), it may be preferable to use several APE's, each describing an aspect of the information of interest. In an integration development environment, there are many applications tracking in a variety of different ways, which textual data is relevant for the entity. Therefore, the profile is structured along those applications. The data of each application which is tracking information about the entity is used to build one part of the profile. One profile part concerning an application can again contain several APEs. Thus, the profile scheme is extensible, as new parts can be added to the profile as soon as there is a new application which is gathering data about the entity. The final profile scheme may then be represented as a tree with APE's at its leaves.

We can illustrate the profile definition with an example user profile. The user is using two applications, a collaborative filtering system and a knowledge-sharing tool capturing an organization-related view of the WWW. The user is in this example a member of the communities "Handhelds" and "Profiles" in the collaborative filtering system. Here both applications, the collaborative filtering system and the knowledge-sharing tool, will gather information about the user. The collaborative filtering system will keep the list of documents that the user submitted to his communities as well as his appreciation (the score) which he gave to the reviewed documents. The knowledge-sharing tool will store the bookmarks for the user. The information gathered by the collaborative filtering system and the knowledge-sharing tool can then be used to deduce the interests of the user. Based on the documents and their score and possibly other available information, we can extract APEs for each collaborative filtering system community the user is active in, and also for the set of documents bookmarked through knowledge-sharing tool. For example, let's say that the user reviewed documents in French and English for the community "Handhelds". The result then will be two APEs in the user's profile for the community "Handhelds". One APE extracting the information of interest for the French documents and another for those that are in English.

The content filtering module 430 is responsible for the selection of relevant content results to be included in the delivered document and as such it may use a variety of algorithms and data to make that determination. In particular it may use information about the users interests found in the user profile and historical data about what the user has previously seen and possibly responded to when making that determination. Usage of a weighted scoring algorithm that factors previously viewed content low, updates to previously viewed content high, content that contains keywords used to select previously viewed content moderately high, and content that contains keywords identified in the user profile medium, results in a suitable yet dynamic content set. These results are then in turn passed onto the document layout module 440. In one embodiment the document layout module 440 is implemented by ADL (Automated Document Layout) software as is taught in US-A-20040019850, US-A-20040205472, US-A-20040205588, and US-A-20040019855. The ADL may be utilized interactively and dynamically so that as user interests are fed back better identifying both reports and advertisements of interest to the user the MyNewsPaper will reflect that feedback both in content and layout as well as delivery service. Once the page layout is complete it is then routed along on its way to the user by the delivery service 450, to print, web browser display, email, etc. If the user interactively changes the desired delivery service (hardcopy of the emailed report) the ADL will dynamically provide the report in the most appropriate layout to accommodate that request.

The teaching provided herein as provided for and discussed above uses automated search, filtering, and layout technologies to provide an end-to-end information push service. As such, it enables complete personalized report documents to be automatically created, thereby reducing cost in existing personalized document workflows, as well as enabling higher value documents to be created to increase consumer satisfaction and knowledge worker productivity.

## Claims

1. A method for personalized report document generation comprising:
profiling user interests and preferences into a user profile;
querying various data repositories for content matching user interests;
filtering the results, returned from the querying step, for scoring and profiling against the user profile for relevant content results;
applying automated document layout techniques to the relevant content results to yield a personalized report document;
delivering the personalized report document;
tracking the user's actual usage of the report document; and
feeding that usage back into the user profile.

2. The method according to claim 1, wherein the automated document layout techniques are guided by the user profile preferences.

3. The method according to claim 1 or claim 2, wherein the personalized report document is provided in PDF format for ultimate delivery as hardcopy print, in HTML format for ultimate delivery to a website, or for ultimate delivery as an email.

4. A system for personalized report document generation comprising:
a user interface profiler to capture user interests into a user profile;
a query module for querying various data repositories for content matching user interests;
a content filter for filtering the results returned from the querying step for scoring and profiling against the user profile for relevant content results;
an automated document layout module for applying automated document layout techniques to the relevant content results to yield a personalized report document; and
a delivery system for delivering the personalized report document to the user, tracking the user's actual usage of the report document and feeding that usage back into the user profile.

5. The system according to claim 4, wherein the automated document layout module is guided by the user profile.

6. The system according to claim 4 or claim 5, wherein the personalized report document is provided in PDF format for ultimate delivery as hardcopy print, in HTML format for ultimate delivery to a website browser, or for ultimate delivery as an email.

7. The system according to any of claims 4 to 6, wherein the website browser is monitored for mouse clicks and that is fed back into the user profile.

8. The system according to any of claims 4 to 7, wherein a hand held bar code reader is monitored user usage and that is fed back into the user profile.
